# EUROPEAN PATENT SPECIFICATION

(11) **EP 2 650 145 B1**
(45) Date of publication and mention of the grant of the patent: **12.10.2016**
(21) Application number: 13162673.1
(22) Date of filing: 08.04.2013
(51) Int. Cl.: B60C 11/13, B60C 11/11, B60C 11/03

(54) **Pneumatic tire for running on rough terrain**
Luftreifen zum Fahren auf unebenem Gelände
Bandage pneumatique pour roulage sur terrain accidenté

(30) Priority: 09.04.2012 JP 2012088622
(43) Date of publication of application: 16.10.2013
(73) Proprietor: Sumitomo Rubber Industries, Ltd., Kobe-shi, Hyogo-ken (JP)
(72) Inventor: Hikita, Masahiro, Kobe-shi, Hyogo 651-0072 (JP)
(74) Representative: Manitz, Finsterwald & Partner GbR

(56) References cited:
- EP-A1- 1 992 504
- EP-A1- 2 263 888
- EP-A1- 2 374 636
- JP-A- 2004 351 956

## Description

### Background of the Invention

The present invention relates to a pneumatic tire, more particularly to a structure of the tread portion designed for use on rough terrain and provided with specifically configured blocks capable of improving the durability and traction performance. The features of the preamble of the independent claim are known from EP 2 263 888 A1. Related technologies are known from EP 2 374 636 A1, JP 2004 351956 A and EP 1 992 504 A1.

Pneumatic tires for off-road vehicles are provided with block tread patterns whose land ratio is relatively low. In other words, the blocks are arranged sparsely when compared with tires designed for on-road use. As a result, during running, the radially inner base part of the block is repeatedly subjected to large stress, and damages such as cracks are very liable to occur in the base part. Therefore, if the tire is used under extremely severe conditions, for example, in a motocross race, the block is, in the worst case, torn off.

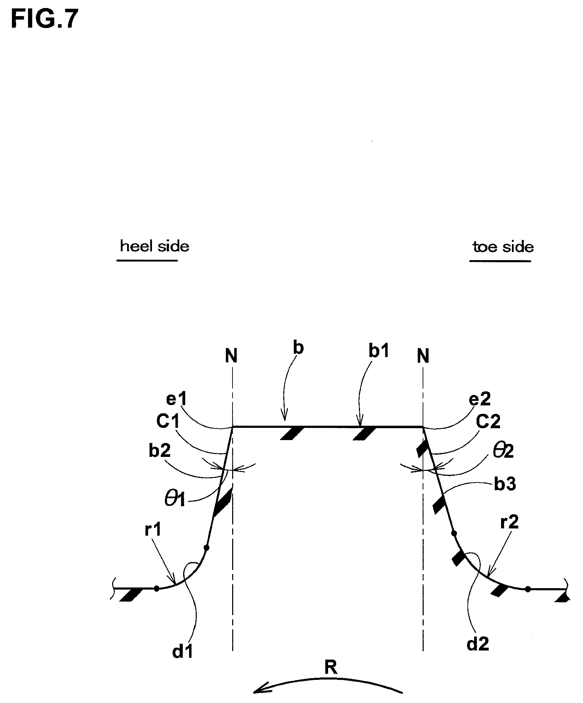

In Japanese Patent Application Publication No. JP-2007-112396A , a pneumatic tire provided with a block improved in the durability is disclosed, wherein, as shown in Fig.7, the block b has a sidewall face b2 extending radially inwardly from a heel-side edge e1 of the ground contacting top face b1, and a sidewall face b3 extending radially inwardly from a toe-side edge e2 of the top face b1.

The sidewall face b2 is compose of a main part c1 inclined at an angle [theta]1 and a curved part d1 having a radius r1. The sidewall face b3 is compose of a main part c2 inclined at an angle [theta]2 and a curved part d2 having a radius r2. The angle [theta]1 is less than the angle [theta]2, and the radius r1 is less than the radius r2.

According to this technique, the block can improve the traction performance owing to the relatively small angle [theta]1. However, since the block rigidity is relatively decreased on the sidewall face b2 side, there is a tendency that the stress exerted on the base part of the block increases, and the durability is decreased.

### Summary of the Invention

It is therefore, an object of the present invention to provide a pneumatic tire for running on rough terrain, in which the durability of a block can be improved without sacrificing the traction performance.

According to the present invention as defined in the independent claim, a pneumatic tire for rough terrain comprises
a tread portion provided with a block having a top face and a sidewall face extending radially inwardly from the peripheral edge of the top face,
the top face having a polygonal shape having a plurality of sides,
the sidewall face comprising a plurality of strip surfaces extending radially inwardly from the above-mentioned sides, respectively, so as to define a corner between every two adjacent strip surfaces, wherein
at least one of the corners is chamfered by a circular arc in a cross section parallel with the top face,
the center of the circular arc is positioned inside the block, and
the radius of the circular arc is gradually increased from the radially outside to the radially inside of the tire.

Preferably, the chamfered part of the corner is extended to the top face.

Preferably, the chamfered part of the corner has a radially outer end which is a pointed end or a radially outer edge in which the above-mentioned radius of the circular arc is 0.5 mm or less. At least one of the strip surfaces is a multi-sloped strip surface, wherein the multi-sloped strip surface comprising a plurality of sloped faces which, in a cross section perpendicular to the side of the top face from which the multi-sloped strip surface extends, have different angles with respect to a normal line drawn to the top face at the side of the top face from which the multi-sloped strip surface extends, the angles of the sloped faces are gradually increased from the radially outside to the radially inside of the tire, and at least one of the two corners on both sides of the multi-sloped strip surface is the above-mentioned chamfered corner.

The top face is provided with a recess having a depth (h), and the difference between the depth (h) and the dimension L of the radially outermost sloped face measured in the height direction of the block from the radially inner edge thereof to the top face, is 0.10 to 0.17 times the height H of the block.

In this application including specification and claims, various dimensions, positions and the like of the tire refer to those under a normally inflated unloaded condition of the tire unless otherwise noted.

The normally inflated unloaded condition is such that the tire is mounted on a standard wheel rim and inflate to a standard pressure but loaded with no tire load.

The undermentioned normally inflated loaded condition is such that the tire is mounted on the standard wheel rim and inflated to the standard pressure and loaded with the standard tire load.

The standard wheel rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used. The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various Cold Inflation Pressures" table in TRA or the like. The standard load is the "maximum load capacity" in JATMA, the "Load Capacity" in ETRTO, the maximum value given in the above-mentioned table in TRA or the like. In case of passenger car tires, however, the standard pressure and standard tire load are uniformly defined by 180 kPa and 88 % of the maximum tire load, respectively.

### Brief Description of the Drawings

Fig.1 is a cross sectional view of a pneumatic tire for running on rough terrain as an embodiment of the present invention.
Fig.2 is a developed partial view of the tread portion thereof.
Fig.3 is a perspective view of a block and its vicinity corresponding to part X of Fig.2.
Fig.4 is a cross sectional view of a part of the block taken along line A-A in Fig.3.
Fig.5 is a cross sectional view of a part of the block taken along line B-B in Fig.3.
Fig.6 is an enlarged perspective view of a chamfered corner of the block.
Fig.7 is a schematic cross sectional view of a block for explaining a prior art tire.

### Description of the Preferred Embodiments

Embodiment of the present invention will now be described in detail in conjunction with accompanying drawings.

According to the present invention, pneumatic tire 1 comprises a tread portion 2, a pair of bead portions 4, a pair of sidewall portions 3 extending from the tread edges to the bead portions 4, and a carcass 6 extending between the bead portions 4 through the tread portion 2 and sidewall portions 3.

In the drawings, the pneumatic tire 1 as an embodiment of the present invention is designed for a off-road motorcycle.

As a characteristic of a motorcycle tire, the tread portion 2 is convexly curved so that the tread face between the tread edges 2e is curved like an arc swelling radially outwardly, and the maximum cross sectional width of the tire 1 occurs between the tread edges 2e, namely, equals to the axial tread width TW.

In this embodiment, the tire 1 is designed to exert its excellent performance when running on soft grounds such as sand and mud and thus it is suitable for used in a motocross race.

The carcass 6 is composed of at least one ply of carcass cords extending between the bead portions 4 through the tread portion 2 and sidewall portions 3. Preferably, organic fiber cords are used as the carcass cords. As to the carcass structure, a radial ply structure or a bias ply structure can be employed.

According to the carcass structure, the tread portion 2 may be provided with a tread reinforcing cord layer, such as belt, breaker and band, on the radially outside of the carcass 6 as usual.

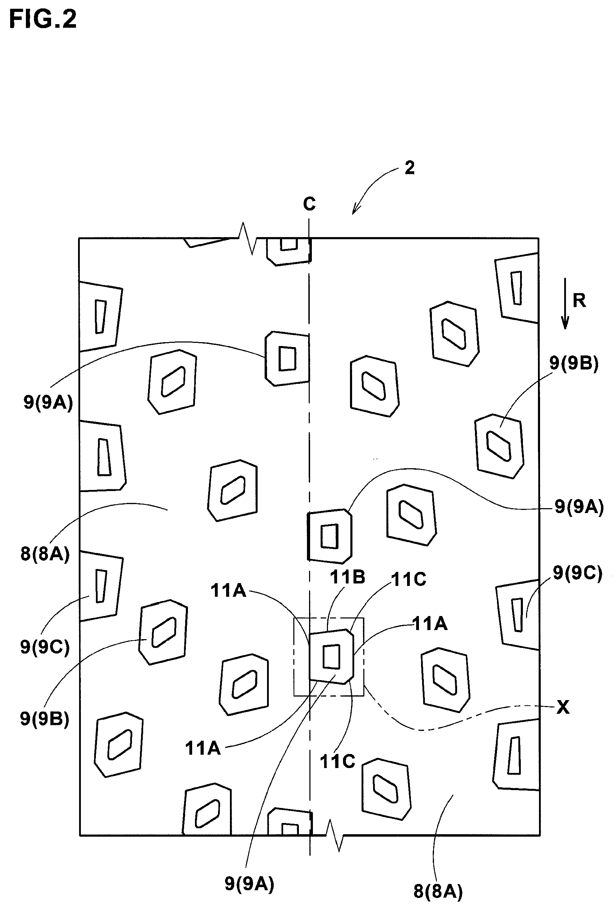

The tread portion 2 is provided with a plurality of blocks 9 arranged sparsely as shown in Fig.2, and in this embodiment, the land ratio (sb/s) is set in a range of not more than 0.5, preferably not more than 0.3 but not less than 0.1 in order to increase the digging of the blocks into the soft ground and thereby to produce a large drive power, but not to trap the mud and the like between the blocks. Incidentally, the land ratio (sb/s) is as well known in the art, a ratio of the ground contacting area Sb (or the total area of the top faces 11 of all the blocks 9) to the gross area S of the tread portion 2.

In this embodiment, the blocks 9 form a unidirectional tread pattern having an intended or designed rotational direction R as shown in Fig.2. Incidentally, the intended tire rotational direction R is indicated in the sidewall portions of the tire by the use of for example an arrowed line or the like.

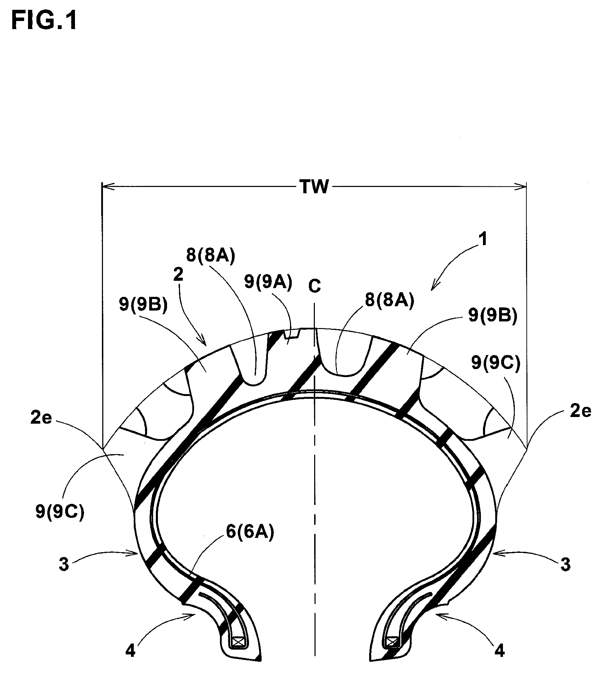

As shown in Fig.1, the bottom 8A of the sea area of the tread portion 2 has a profile which is curved similarly to the profile of the outer surface of the carcass 6.

Here, the "sea area" means the area surrounding the blocks 9 and corresponding to the "grooved area" of the tread portion of a tire for passenger cars, truck/bus and the like. Since the land ratio (Sb/S) is small as explained above, the term "sea" is used instead of "groove".

Each of the blocks 9 protrudes from the bottom 8A and has a top face 11 defining a part of the tread surface.

The block 9 has a sidewall face 12 extending from the peripheral edge of the top face 11 toward the bottom 8A.

The height BH of the block 9 from the bottom 8A to its top face 11 is preferably set in a range of not less than 6.0 mm, more preferably not less than 10.0 mm, but not more than 19.0 mm, more preferably not more than 14.0 mm.

If the height BH is less than 6.0 mm, it becomes difficult to obtain a sufficient drive force and braking force on rough terrains. If the height BH is more than 19.0 mm, there is a possibility that the durability of the blocks 9 is deteriorated due to large bending moment occurring at the time of braking and driving.

The top face 11 of each of the blocks 9 has a polygonal shape defined by sides (or straight lines).

Preferably, the number of such sides is set in a range of from 4 to 8 (tetragon-octagon), more preferably 4 to 6 (tetragon-hexagon) in order to effectively derive an edge effect from the sides.

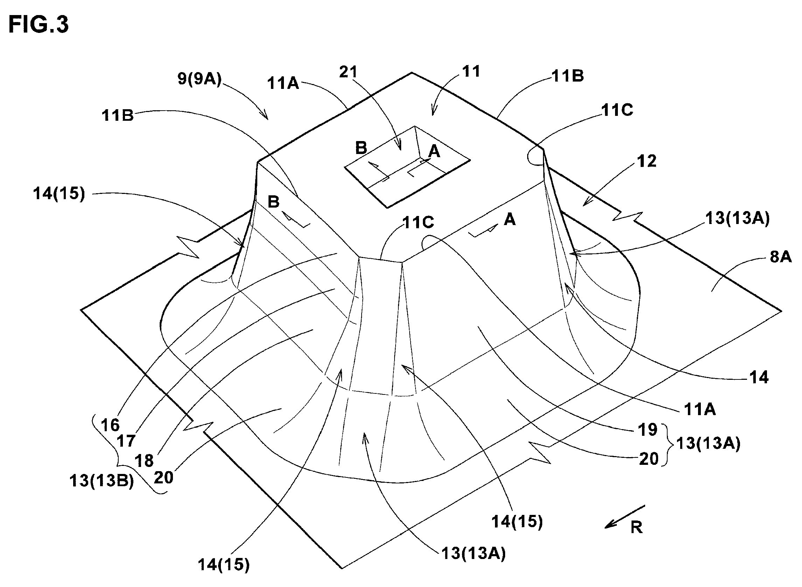

The above-mentioned sidewall face 12 comprises a plurality of strip surfaces 13 extending radially inwardly from the respective sides (for example 11A-11C in Fig.3) of the top face 11, defining a corner 14 between every two adjacent strip surfaces 13.

The dimension of the strip surface 13 measured along the related side is substantively maintained from its top to bottom.

The above-mentioned strip surfaces 13 of one block 9 includes at least one multi-sloped strip surface 13B and optionally a single-sloped strip surface 13A.

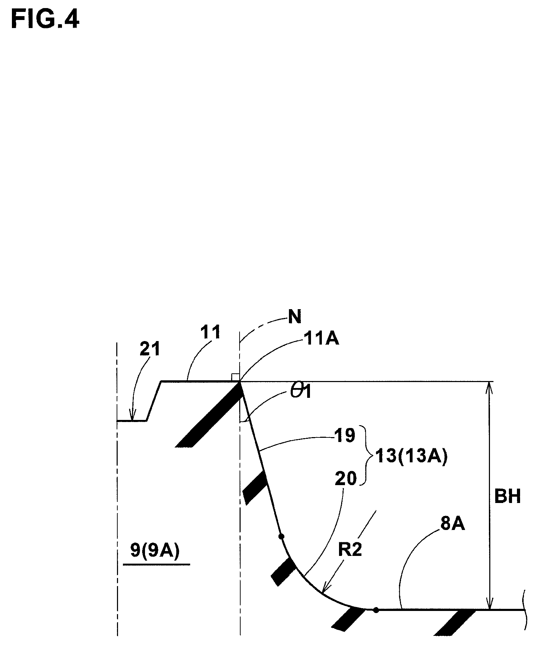

The single-sloped strip surface 13A comprises a single sloped face 19 and a radially inner curved face 20. As shown in Fig.4, in a cross section of the block 9 perpendicular to the side (11A) from which the single-sloped strip surface 13A extends,

the sloped face 19 is substantially straight and inclined to the outside of the block toward the radially inside, at an inclination angle θ1 with respect to a normal line N drawn to the top face 11 at the side concerned, and
the curved face 20 is a circular arc having its center outside the block and extending from the radially inner edge of the sloped face 19 toward the bottom 8A and merged with the surface of the bottom 8A.

The multi-sloped strip surface 13B comprises a plurality of sloped faces (in Fig.3, first-third sloped faces 16-18) and a radially innermost curved face 20.

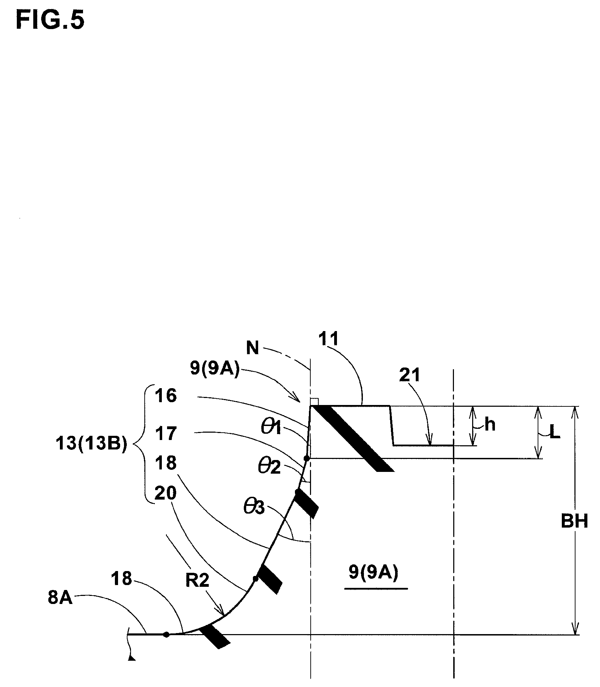

As shown in Fig.5, in a cross section of the block 9 perpendicular to the side (11B) from which the multi-sloped strip surface 13B extends,
each of the sloped faces (16-18) is substantially straight and inclined to the outside of the block toward the radially inside, at an inclination angle θi (i is a suffix from 1 to the number n of the sloped faces) with respect to a normal line N drawn to the top face 11 at the side concerned, and
the curved face 20 is a circular arc having its center outside the block and extending from the radially inner edge of the radially innermost sloped face (18) toward the bottom 8A and merged with the surface of the bottom 8A.

The sloped faces (16-18) are arranged continuously from the radially outside to the radially inside of the tire, and their inclination angles θ1-θn are gradually increased from the radially outermost sloped face to the radially innermost sloped face. (θ1 < θ2 < -- < θn)

Preferably, the angle θn of the radially innermost sloped face is set in a range of from 15 to 30 degrees, and the angle θ1 of the radially outermost sloped face is set in a range of from -5 to 5 degrees.

Here, a minus vale of the angle θn means that the face concerned is inclined to the inside of the block toward the radially inside. The radially outermost sloped face may be inclined at an angle θ1 of a minus vale as far as its absolute value is small as limited above.

In order to secure the rigidity of the block 9, the angles θ2-- of the sloped faces other than the radially outermost sloped face are plus vales, namely, the sloped faces are inclined to the outside of the block toward the radially inside.

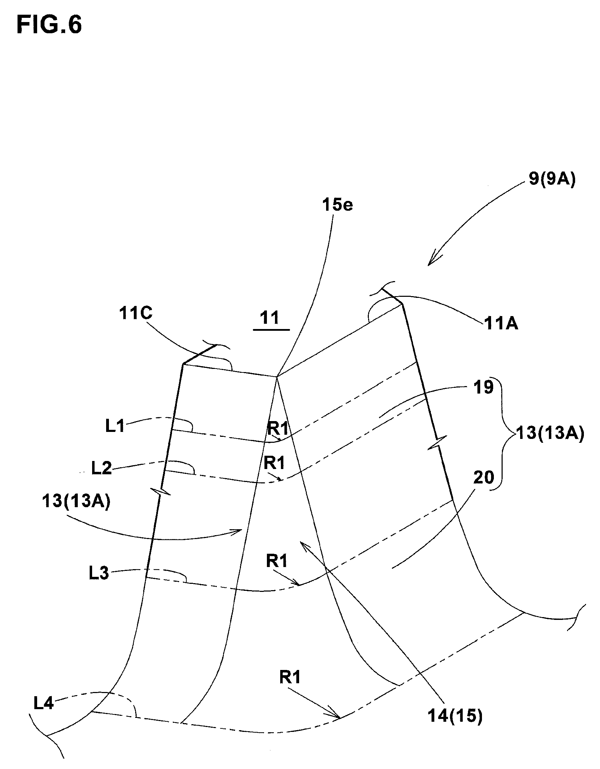

At least one of the corners 14 of a block 9 is chamfered by a circular arc in any cross section (L1- L4) parallel with the top face 11 as shown in Fig.6 (hereinafter, the "chamfered corner 15"). The circular arc has its center inside the block 9, and the radius R1 of the circular arc is gradually increased from the radially outside to the radially inside of the tire. Therefore, a part of the surface of the chamfered corner 15 becomes a part of a circular conical surface.

It is not always necessary that all of the blocks 9 disposed n the tread portion are provided with the chamfered corner 15. However, the blocks 9 provided with the chamfered corner 15 have to include those disposed in a central part of the tread, and preferably, all of the corners 14 of such a central block 9 are chamfered as explained above.

At the radially innermost edge of the surface of the chamfered corner 15, the radius R1 is Preferably set in a range of from 3 to 10 mm.

If less than 3 mm, it is difficult to improve the durability of the block 9. If more than 10 mm, even if the block 9 digs into the ground, the resistance to block movement in parallel with the ground becomes small, therefore, the grip performance is deteriorated.

In the chamfered corner 15 in this embodiment, the chamfered surface extends from the top face 11 to the bottom 8A, therefore, the radially innermost edge of the chamfered surface is positioned at the bottom 8A.

Preferably, the surface of the chamfered corner 15 has a pointed end 15e positioned at the top face 11 as shown in Fig.6 rather than an edge having a certain length.

However, even when the edge has a certain length, if the above-mentioned radius R1 is 0.5 mm or less, such small edge may be regarded as a pointed end 15e, therefore, the term "pointed end" used in this application includes such a small edge. Such pointed end 15e can reduce the resistance to digging of the block into the ground, and can improve the traction performance of the tire.

The blocks 9 are preferably provided in the top face 11 with a recess 21 having a certain depth h from the top face 11.

It is preferable that, as shown in Fig.5, the difference between the depth h and the dimension L in the block's height direction, of the radially outermost sloped face (16) of the multi-sloped strip surface 13B is set in a range of from 0.1 to 0.17 times the height BH of the block 9.

By the recess 21, the rigidity of the top of the block 9 is reduced, and thereby, the occurrence of damage at the peripheral edge of the top face 11 when contacting with the ground is lessened. Further, the traction is improved. If the depth h of the recess 21 is excessively increased, the rigidity of the block 9 is decreased and the digging of the block becomes insufficient. If the depth h is decreased, the occurrence of damage at the peripheral edge of the top face 11 becomes increased, and as a result, it is difficult to effectively improve the traction performance.

since the single-sloped strip surface 13A and multi-sloped strip surface 13B both include the curved face 20, they can prevent the base part of the block 9 from stress concentration, and can increase the durability of the block.

Due to the sloped faces having gradually increasing angles θn, the multi-sloped strip surface 13B can achieve both of the reducing of the resistance to digging of the block 9 into the ground and the increasing of the rigidity of the base part of the block.

In general, the stress of the block 9 is liable to concentrate at the corners 14 of the base part of the block 9. Therefore, by chamfering the corner 14 as explained above, the stress is dispersed and mitigated, and thereby, the occurrence of damages such as cracks can be prevented and the durability of the block 9 is improved.

By making the surface of the chamfered corner 15 a part of a circular conical surface, it helps to reduce the resistance to digging of the block 9 into the ground to improve the traction performance.

### * Tread pattern shown in FIG.2

In this particular example of the tread pattern shown in FIG.2, the blocks 9 include: center blocks 9A define as being disposed on or abutting on the tire equator C; shoulder blocks 9C define as abutting on the tread edges 2e; and other middle blocks 9B disposed between the center blocks 9A and the shoulder blocks 9c.

As to the above-mentioned polygonal shape of the top face 11, the center blocks 9A and the middle blocks 9B are hexagon, and the shoulder blocks 9C are tetragon and pentagon.

In the center block 9A, as shown in Fig.2 and Fig.3, the top face 11 has a shape defined by
a pair of circumferential sides 11A extending parallel with the tire circumferential direction as an upper base and an lower base;
a pair of oblique sides 11B extending from both ends of the circumferential side 11A on the tire equator side (in this example, upper base) wherein the interior angle between each of the oblique sides 11B and this circumferential side 11A is an obtuse angle; and
a pair of short chamfering sides 11C extending between the axially outer circumferential side 11A (in this example, lower base) and the oblique sides 11B.

This shape is based on a trapezoid, but actually an irregular hexagon due to the short chamfering sides 11C. The dimension of the top face 11 measured parallel with the tire circumferential direction is gradually increased from the upper base toward the lower base to the short chamfering sides 11C.

The sidewall face 12 of the center block 9A comprises six strip surfaces 13 extending from the six sides 11A-11C and six corners 14 between the six strip surfaces 13.

In the center block 9A, the strip surface 13 extending from each of the circumferential sides 11A is formed as the single-sloped strip surface 13A.

Meanwhile, the strip surface 13 extending from each of the oblique sides 11B is formed as the multi-sloped strip surface 13B comprising the three sloped faces 16-18 and the radially innermost curved face 20.

The strip surface 13 extending from each of the short chamfering sides 11C is formed as the single-sloped strip surface 13A. However, it is also possible to form this strip surface as the multi-sloped strip surface 13B.

As shown in Fig.5, in a cross section of the center block 9A perpendicular to the oblique side 11B, the first-third sloped faces 16-18 are inclined at inclination angles θ1, θ2 and θ3, respectively, with respect to a normal line N drawn to the top face 11 at the oblique side 11B.

The inclination angles θ1-θ3 are gradually increased from the radially outermost sloped face to the radially innermost sloped face. (θ1 < θ2 < θ3)

Preferably, the angle θ3 is 15 to 30 degrees, and the angle θ1 is -5 to 5 degrees. The angle θ2 is a plus vale. In the center block 9A, all of the corners 14 are chamfered as explained above.

In the shoulder blocks 9C, their top faces 11 have a tetragon defined by four sides and a pentagon defined by four long sides and one short side. In either case, the top faces 11 each have the axially outermost side extending parallel with the tire circumferential direction, defining the tread edges. The strip surfaces 13 extending from the outermost sides are formed as the single-sloped strip surface 13A.

The strip surfaces 13 extending from the sides other than the outermost sides are formed as the multi-sloped strip surface 13B. In the shoulder blocks 9C in this example, all of the corners 14 are not chamfered.

In the middle blocks 9B, their top faces 11 have a hexagon defined by a pair of opposite sides extending axially, a pair of opposite sides extending circumferentially and a pair of relatively short sides arranged diagonally.

In the case of the middle block 9B, all of the strip surfaces 13 are formed as the multi-sloped strip surface 13B, and all of the corners 14 are chamfered as explained above.

In this example, all of the blocks 9 are provided in the top face 11 with a recess 21 having a radial depth h.

### Comparison Tests

Based on the tread pattern (land ratio 0.2) shown in Fig.2, motorcycle tires having specifications shown in Table 1 were prepared and tested.

In the test, using a 450cc four-strokes motocross bike, a test rider evaluated the traction performance based on the transmission of drive power during running on a motocross course. The results are indicated in Table 1 by an index based on comparative tire Ref.1 being 100, wherein the larger the value, the better the traction performance. (Tire pressure: 80 kPa)

Further, after running on the motocross course for 20 minutes twice under a full throttle condition, the number of the blocks in which cracks occurred at their base parts was counted for each tire. The results are indicated in Table 1 by an index based on comparative tire Ref.1 being 100, wherein the larger the value, the better the durability.

As described above, in the pneumatic tire according to the present invention, the occurrence of cracks is effectively prevented, therefore, the durability of the blocks can be improved. At the same time, the resistance to digging of the block into the soft ground is decreased, therefore, the traction performance can be improved.

### Applicability

In addition to a motorcycle tire, the present invention can be applied to pneumatic tires for three-wheel or four-wheel all-terrain or off-road vehicles.

**Table 1**

| Tire | Ref.1 | Ex.1 | Ex.2 | Ex.3 | Ex.4 | Ex.5 | Ex.6 | Ex.7 | Ex.8 | Ex.9 | Ex.10 | Ex.11 | Ex.12 | Ex.13 | Ex.14 | Ex.15 | Ex.16 | Ex.17 |
|---|---|---|---|---|---|---|---|---|---|---|---|---|---|---|---|---|---|---|
| Radius R1 at bottom 8A (mm) | 0 | 2.0 | 3.0 | 4.0 | 4.0 | 4.0 | 4.0 | 4.0 | 4.0 | 4.0 | 4.0 | 4.0 | 4.0 | 4.0 | 10.0 | 12.0 | 4.0 | 4.0 |
| Outer end/edge of chamfered corner *1 | P | P | P | P | P | P | P | P | 0.5 | 1.0 | P | P | P | P | P | P | P | P |
| \|L-h\|/BH | 0.17 | 0.17 | 0.17 | 0 | 0.1 | 0.13 | 0.17 | 0.20 | 0.17 | 0.17 | 0 | 0.17 | 0.17 | 0.17 | 0.17 | 0.17 | 0.17 | 0.17 |
| BH (mm) | 11.5 | 11.5 | 11.5 | 11.5 | 11.5 | 11.5 | 11.5 | 11.5 | 11.5 | 11.5 | 11.5 | 6.0 | 19.0 | 11.5 | 11.5 | 11.5 | 11.5 | 11.5 |
| Recess provided ? (Yes/No) | Y | Y | Y | Y | Y | Y | Y | Y | Y | Y | N | Y | Y | Y | Y | Y | Y | Y |
| Number of multi-sloped faces | 3 | 3 | 3 | 3 | 3 | 3 | 3 | 3 | 3 | 3 | 3 | 3 | 3 | 1 *2 | 3 | 3 | 3 | 3 |
| angle of radially outermost sloped face (deg) | 0 | 0 | 0 | 0 | 0 | 0 | 0 | 0 | 0 | 0 | 0 | 0 | 0 | 0 | 0 | 0 | -5 | 5 |
| Traction | 100 | 100 | 100 | 95 | 95 | 100 | 100 | 98 | 98 | 92 | 90 | 95 | 95 | 100 | 95 | 90 | 100 | 100 |
| Durability | 100 | 102 | 110 | 105 | 106 | 110 | 110 | 104 | 110 | 110 | 106 | 110 | 105 | 101 | 110 | 110 | 108 | 110 |
| Overall | 100 | 101 | 105 | 100 | 101 | 105 | 105 | 101 | 104 | 101 | 98 | 103 | 100 | 101 | 103 | 100 | 104 | 105 |

| | | | | | | | | | | | | | | | | | | |
|---|---|---|---|---|---|---|---|---|---|---|---|---|---|---|---|---|---|---|
| *1) P: pointed end numerical value: edge having a radius R1 of the numerical value *2) single-sloped strip surface was used instead of multi-sloped strip surface | | | | | | | | | | | | | | | | | | |

## Claims

1. A pneumatic tire (1) for rough terrain comprising
a tread portion (2) provided with a block (9) having a top face (11) and a sidewall face (12) extending radially inwardly from the peripheral edge of the top face (11),
the top face (11) having a polygonal shape having a plurality of sides (11A, 11B, 11C),
the sidewall face (12) comprising a plurality of strip surfaces (13) extending radially inwardly from said sides (11A, 11B, 11C), respectively, so as to define a corner (14) between every two adjacent strip surfaces (13), wherein
at least one of the strip surfaces (13) is a multi-sloped strip surface (13B), the multi-sloped strip surface (13B) comprising a plurality of sloped faces (16, 17, 18) which, in a cross section perpendicular to the side (11A, 11B, 11C) of the top face (11) from which the multi-sloped strip surface (13B) extends, have different angles (θ1, θ2, θ3) with respect to a normal line (N) drawn to the top face (11) at the side (11A, 11B, 11 C) of the top face (11) from which the multi-sloped strip surface (13B) extends,
the angles (θ1, θ2, θ3) of the sloped faces (16, 17, 18) are gradually increased from the radially outside to the radially inside of the tire (1),
**characterized in that**
at least one of the corners (14) is chamfered by a circular arc in a cross section parallel with the top face (11),
the center of the circular arc is positioned inside the block (9), and
the radius (R1) of the circular arc is gradually increased from the radially outside to the radially inside of the tire (1),
at least one of the two corners (14) on both sides of the multi-sloped strip surface (13B) is said chamfered comer (15),
the top face (11) is provided with a recess (21) having a depth (h), and
the difference between the depth (h) and the dimension (L) of the radially outermost sloped face (16) measured in the height direction of the block (9) from the radially inner edge thereof to the top face (11), is 0.10 to 0.17 times the height (BH) of the block (9).

2. The pneumatic tire according to claim 1, wherein
the chamfered part of the corner (14) is extended to the top face (11).

3. The pneumatic tire according to claim 1 or 2, wherein
the chamfered part of the corner (14) has a radially outer end which is a pointed end (15e) or a radially outer edge in which said radius (R1) of the circular arc is 0.5 mm or less.

## Patentansprüche

1. Luftreifen (1) für raues Gelände, umfassend
einen Laufflächenabschnitt (2), der mit einem Block (9) versehen ist, der eine obere Fläche (11) und eine Seitenwandfläche (12) aufweist, die sich von der Umfangskante der oberen Fläche (11) radial nach innen erstreckt,
wobei die obere Fläche (11) eine Polygonform mit einer Mehrzahl von Seiten (11A, 11 B, 11 C) aufweist,
die Seitenwandfläche (12) eine Mehrzahl von Streifenoberflächen (13) umfasst, die sich von den Seiten (11A, 11 B, 11C) jeweils radial nach innen erstrecken, um zwischen jeweils zwei benachbarten Streifenoberflächen (13) eine Ecke (14) zu definieren, wobei
zumindest eine der Streifenoberflächen (13) eine Streifenoberfläche (13B) mit mehreren Schrägen ist, wobei die Streifenoberfläche (13B) mit mehreren Schrägen eine Mehrzahl von schrägen Flächen (16, 17, 18) umfasst, die in einem Querschnitt senkrecht zu der Seite (11A, 11 B, 11C) der oberen Fläche (11), von welcher aus sich die Streifenoberfläche (13B) mit mehreren Schrägen erstreckt, unterschiedliche Winkel (θ1, θ2, θ3) mit Bezug auf eine senkrechte Linie (N) aufweisen, die zu der oberen Fläche (11) an der Seite (11A, 11 B, 11 C) der oberen Fläche (11) gezogen ist, von welcher sich die Streifenoberfläche (13B) mit mehreren Schrägen erstreckt,
wobei die Winkel (θ1, θ2, θ3) der schrägen Flächen (16, 17, 18) von der radialen Außenseite zu der radialen Innenseite des Reifens (1) allmählich vergrößert sind,
**dadurch gekennzeichnet, dass**
zumindest eine der Ecken (14) mit einem Kreisbogen in einem Querschnitt parallel zu der oberen Fläche (11) angefast ist,
die Mitte des Kreisbogens innerhalb des Blocks (9) angeordnet ist, und
der Radius (R1) des Kreisbogens von der radialen Außenseite zu der radialen Innenseite des Reifens (1) allmählich vergrößert ist,
zumindest eine der zwei Ecken (14) auf beiden Seiten der Streifenoberfläche (13B) mit mehreren Schrägen die angefaste Ecke (15) ist,
die obere Fläche (11) mit einer Ausnehmung (21) versehen ist, die eine Tiefe (h) aufweist, und
die Differenz zwischen der Tiefe (h) und der Abmessung (L) der radial äußersten schrägen Fläche (16), in der Höhenrichtung des Blockes (9) von seiner radial inneren Kante zu der oberen Fläche (11) gemessen, das 0,10- bis 0,17-fache der Höhe (BH) des Blocks (9) beträgt.

2. Luftreifen nach Anspruch 1, wobei der angefaste Teil der Ecke (14) bis zu der oberen Fläche (11) verlängert ist.

3. Luftreifen nach Anspruch 1 oder 2, wobei der angefaste Teil der Ecke (14) ein radial äußeres Ende aufweist, welches ein spitz zulaufendes Ende (15e) oder eine radial äußere Kante ist, in welcher der Radius (R1) des Kreisbogens 0,5 mm oder weniger beträgt.

## Revendications

1. Bandage pneumatique (1) pour terrains accidentés, comprenant une portion formant bande de roulement (2) dotée d'un bloc (9) ayant une face supérieure (11) et une face de paroi latérale (12) s'étendant radialement vers l'intérieur depuis la bordure périphérique de la face supérieure (11),
la face supérieure (11) ayant une forme polygonale ayant une pluralité de côtés (11A, 11B, 11C),
la face de paroi latérale (12) comprenant une pluralité de surfaces en ruban (13) s'étendant radialement vers l'intérieur depuis lesdits côtés (11A, 11B, 11C), respectivement, de manière à définir un coin (14) à chaque fois entre deux surfaces en ruban (13) adjacentes, dans lequel l'une au moins des surfaces en ruban (13) est une surface en ruban à pentes multiples (13B), la surface en ruban à pentes multiples (13B) comprenant une pluralité de faces en pente (16, 17, 18) qui, dans une section transversale perpendiculaire au côté (11A, 11B, 11C) de la face supérieure (11) depuis lequel s'étend la surface en ruban à pentes multiples (13B), ont des angles différents (θ1, θ2, θ3) par rapport à une ligne normale (N) tirée vers la face supérieure (11) au niveau du côté (11A, 11B, 11C) de la face supérieure (11) depuis lequel s'étend la surface en ruban à pentes multiples (13B),
les angles (θ1, θ2, θ3) des faces en pente (16, 17, 18) augmentent graduellement depuis la région radialement extérieure vers la région radialement intérieure du pneumatique (1),
**caractérisé en ce que**
l'un au moins des coins (14) est chanfreiné par un arc circulaire dans une section transversale parallèle à la face supérieure (11),
le centre de l'arc circulaire est positionné à l'intérieur du bloc (9), et
le rayon (R1) de l'arc circulaire augmente graduellement depuis la région radialement extérieure vers la région radialement intérieure du pneumatique (1),
l'un au moins des deux coins (14) sur les deux côtés de la surface en ruban à pentes multiples (13B) est ledit coin chanfreiné (15),
la face supérieure (11) est pourvue d'un évidement (21) ayant une profondeur (h), et
la différence entre la profondeur (h) et la dimension (L) de la face en pente (16) radialement la plus à l'extérieur, mesurée dans la direction en hauteur du bloc (9) depuis la bordure radialement intérieure de celui-ci jusqu'à la face supérieure (11), est de 0,10 à 0,17 fois la hauteur (BH) du bloc (9).

2. Bandage pneumatique selon la revendication 1, dans lequel
la partie chanfreinée du coin (14) s'étend jusqu'à la face supérieure (11).

3. Bandage pneumatique selon la revendication 1 ou 2, dans lequel
la partie chanfreinée du coin (14) a une extrémité radialement extérieure qui est une extrémité pointue (15e) ou une bordure radialement extérieure dans laquelle ledit rayon (R1) de l'arc circulaire est de 0,5 mm ou moins.
